# EUROPEAN PATENT APPLICATION

(11) **EP 2 456 238 A1**
(43) Date of publication of application: **23.05.2012**
(21) Application number: 10306266.7
(22) Date of filing: 17.11.2010
(51) Int. Cl.: H04W 4/02, G06Q 30/00, H04L 29/08

(54) **System for broadcasting services to a group of users**

(71) Applicant: Alcatel Lucent, 75007 Paris (FR)
(72) Inventor: Kostadinov, Dimitre Davidov, 91620, NOZAY (FR); Kamga, Guy-Bertrand, 91620, NOZAY (FR); Dupont, Marie-Pascale, 91620, NOZAY (FR); Senot, Christophe, 90620, NOZAY (FR)
(74) Representative: Mouney, Jérôme

(57) **Abstract**

For broadcasting multimedia services to users that are located within a geographical area and are equipped with mobile terminals (MT), a device (PD) linked to a service delivery point associated to a geographical area determines a score attributed by each user to each service among a plurality of services (e.g. news, advertising, sport results), associates a weight to the score attributed by each user to each service according to the location and the activity (e.g. moving, standing) of the user within the geographical area, produces a group profile according to the scores of the users modified by the weights, and selects a service adapted to the group profile in order to broadcast the selected service within the geographical area via the service delivery point.

## Description

### FIELD OF THE INVENTION

The present invention relates to a system for broadcasting personalized services. More specifically, the invention relates to a system for broadcasting services to a group of users present in a given geographical area.

### BACKGROUND

Nowadays, due to the explosion of communicating means, people cross daily several service delivery points. Many services, such as advertisement, news or entertainment delivery, are then offered to multiple potential users in public areas such as shopping mall, street, bus station, airport, train station, waiting room, bar etc.

For improving the impact of these services, they need to be personalized according to the users who receive them. Unfortunately, due to privacy issues, some users do not give access to their profiles and for those whose profiles are accessible, not all the profile elements, neither all these users are relevant for personalizing the delivered services.

Currently, there is no solution that determines among potential users, the ones who are relevant for a given service.

### SUMMARY

To remedy the problems referred to hereinabove, a method according to the invention for broadcasting multimedia services to users that are located within a geographical area and are equipped with mobile terminals, comprises the following steps in a device linked to a service delivery point associated to the geographical area :
determining a score attributed by each user to each service among a plurality of services,
associating a weight to the score attributed by each user to each service according to the location and the activity of the user within the geographical area,
producing a group profile according to the scores of the users modified by the weights, and
selecting a service adapted to the group profile in order to broadcast the selected service within the geographical area via the service delivery point.

The invention advantageously considers the relevance of users to the service and builds group profiles by considering only relevant parts of user profiles.

Advantageously, the invention makes advertising or information display more accurate or relevant for the users. The system chooses the most appropriate users for a given service, i.e. users who can take benefit of the service and who could be interested in it, saves cost by avoiding providing useless services.

In an embodiment, the selected service is the service having the highest scores among the scores modified by the weights.

In an embodiment, the method further comprises the step of defining a format type for the service, depending on the location of users in the geographical area. The format type can be a format among an image format, an audio format, a video format, and an audio-video format.

In an embodiment, the location and the activity of the users are determined by a set of sensors monitoring the geographical area through wireless communication with the mobile terminals of the users. The activity of a user can be defined according to one of immobility and mobility status, this latter comprising the direction and speed of the user.

In an embodiment, the score attributed by a user is determined from a user profile that is retrieved from the mobile terminal of the user via a wireless communication.

A further object of the invention is a device linked to a service delivery point associated to a geographical area for broadcasting multimedia services to users that are located within a geographical area and are equipped with mobile terminals, said device comprising :
means for determining a score attributed by each user to each service among a plurality of services,
means for associating a weight to the score attributed by each user to each service according to the location and the activity of the user within the geographical area,
means for producing a group profile according to the scores of the users modified by the weights, and
means for selecting a service adapted to the group profile in order to broadcast the selected service within the geographical area via the service delivery point.

The invention relates further to a computer program adapted to be executed in a device linked to a service delivery point associated to a geographical area for broadcasting multimedia services to users that are located within a geographical area and are equipped with mobile terminals, said program including instructions which, when the program is executed in said segmentation device, execute the steps of the method of the invention

### BRIEF DESCRIPTION OF THE FIGURES

Some embodiments of the present invention are now described, by way of example only, and with reference to the accompanying drawings, in which:
- FIG. 1 is a schematic block-diagram of a profiling device connected to a detection system according to an embodiment of the invention,
- FIG. 2 is a schematic block-diagram of an example of determining relevant users for a targeted advertisement service, and
- FIG. 3 is a flowchart showing steps performed to execute a method for broadcasting multimedia services according to an embodiment of the invention.

The same reference number represents the same element or the same type of element on all drawings.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

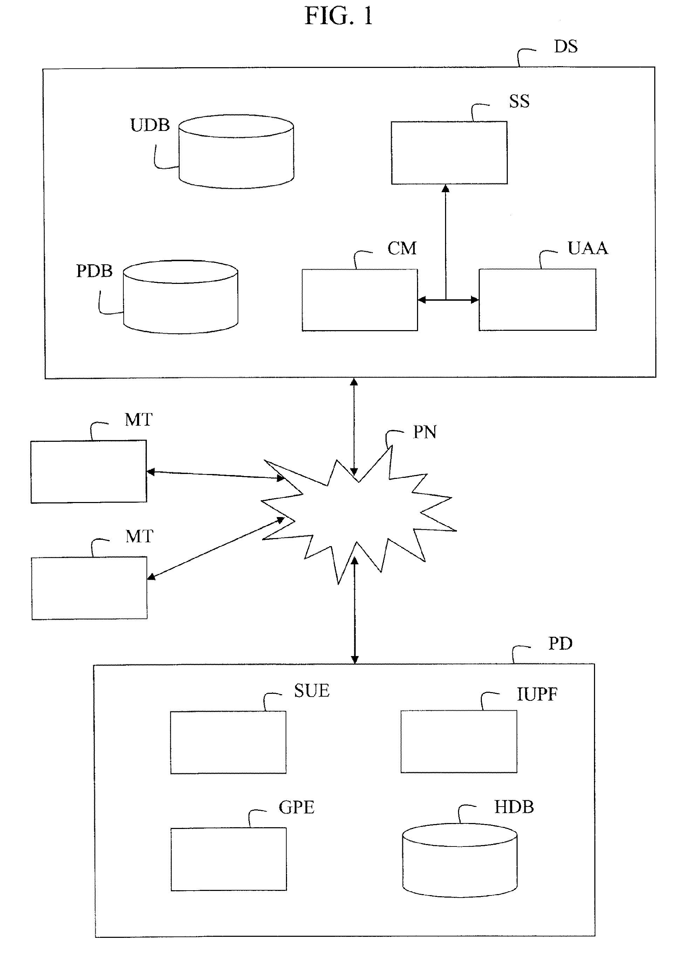

Referring to FIG. 1, a communication system comprises a profiling device PD able to communicate with a detection system DS through a packet network PN.

The packet network PN is, for example, an IP ("Internet Protocol") high-speed network such as the Internet or an intranet, or even a company-specific private network.

It is considered that a group of users is present in a given geographical area at a given instant. The given geographical area corresponds to an area in which a service can be broadcasted by a service delivery point. The service delivery point can broadcast different services of different service providers. According to the invention, the service delivery point may be able to broadcast in the given geographical area a selected service adapted to the group of users present in the area.

The users taken into account for the service delivery point are the users equipped with a mobile terminal MT. For clarity purpose, only two mobile terminals MT are represented in FIG. 1.

The mobile terminal MT can be a radio communication mobile terminal. For example, the terminal MT is a mobile phone, or is a communicating Personal Digital Assistant PDA, or an intelligent telephone like SmartPhone.

In an example, the mobile terminal MT is connected to a base station of a public wireless network of limited scope, such as WLAN (Wireless Local Area Network) or conforming to a standard 802.1x, or medium range according to the protocol WiMAX (World Wide Interoperability Microwave Access).

In another example, the mobile terminal MT is a cellular mobile radio communication terminal, connected by a channel to a radio access network comprising the network of a fixed radio communication network, eg GSM (Global System for Mobile communications) or UMTS (Universal Mobile Telecommunications System) or LTE (Long Term Evolution).

The service delivery point may be able to provide a multimedia service in a given geographical area. For example, an ad service can be offered under audio and/or video form. The service delivery point may include a screen for the video form of the service and speakers for the audio form of the service.

The detection system DS includes a profile database PDB, a user behavior patterns database UDB, a set of sensors SS, a context manager CM, and a user activity analyzer UAA.

The profile database PDB stores individual user profiles. It can be centralized, all user profiles being stored at the same place, or distributed on user's mobile terminals MT, each user profile being stored on the mobile terminal of its owner. User profile information includes demographic data, user preferences, tastes etc. but also information about contexts in which these data are valid and privacy policies of their usage. It is considered that each user decides, as user preferences, what kind of information in its profile can be divulged and used by the detection system DS.

Indeed, privacy issues are to be considered as user preferences will be divulged to other users. However, even critical, privacy issues are not the central part of the invention. User profiles from the profile database PDB are taken as input by the profiling device PD.

The user behavior patterns database UDB database contains patterns of user behavior necessary to identify user's activity, orientation in the space etc. Information stored in this database UDB is used by the user activity analyzer UAA.

The set of sensors SS captures contextual data, such as time, location or weather, and basic user actions, such as immobility, moving down or forward. These data are analyzed to infer the user's context and the user's activity. For example, the set of sensors monitors the geographical area during given cycles and periods, such as three times, a ten seconds period etc., to determine users' location and activity. The activity of a user can be defined according to one of immobility and mobility status, this latter comprising the direction and speed of the user.

The set of sensors SS can be disposed in or close to the geographical area of the service delivery point. The location and the activity of a user can be determined through wireless communication with the mobile terminals by means of known geo-localization system, by a triangulation method for example.

The context manager CM is in charge of transforming the low level data coming from the set of sensors SS into more valuable information which are used later by the other components. Furthermore, the context manager CM monitors the location of service delivery points associated to respective geographical areas and monitors the location of users in each geographical area.

The user activity analyzer UAA takes as input simple user actions captured by sensors and infers a higher level user activity. This analysis relies on patterns of user behavior stored in the user behavior patterns database UDB. For example, it could infer that the user is "running" if a sensor detects that the user is moving forward with a high speed.

The profiling device PD includes a services usage estimator SUE, an individual user profile filter IUPF, a group profiling engine GPE and a history database HDB.

The services usage estimator SUE identifies which services are relevant for which users. A service is considered as relevant for a given user, if the later can take benefit of it according to its location and current activity. For example, a targeted ad service won't be considered as relevant for a user who cannot see the screen of the service delivery point on which the ads are displayed.

The individual user profile filter IUPF extracts relevant parts from individual user profile according to each service. Information is considered as relevant for a given service if it is useful according to the current user's context and preferences and if the user can take benefit from the service.

The filter IUPF, in collaboration with the estimator SUE, also assigns a weight to each relevant part of individual user profiles which expresses its relative importance compared to parts of other users' profiles. For example, the closer the user is to the screen of a targeted ad service, the higher the weight assigned to the relevant part of its profile. The weight can also depend on the estimated duration (according to the user speed) that a user will spend in the geographical area (close to the service delivery point). Also, based on the walking direction of the user, the profile device can infer that the user can not see the screen of the service delivery point.

The group profiling engine GPE takes as input relevant parts of individual profiles with their weights and produces a group profile to be used by service providers. The way individual preferences are aggregated depends on the profile model. For example, if preferences are expressed as weighted concepts, the resulting aggregated group profile can be obtained by making the weighted mean of concepts' weights. For saving computation time, if the same users are often in the given context, the resulting group profile is stored in the group profile history database HDB in order to be reused later.

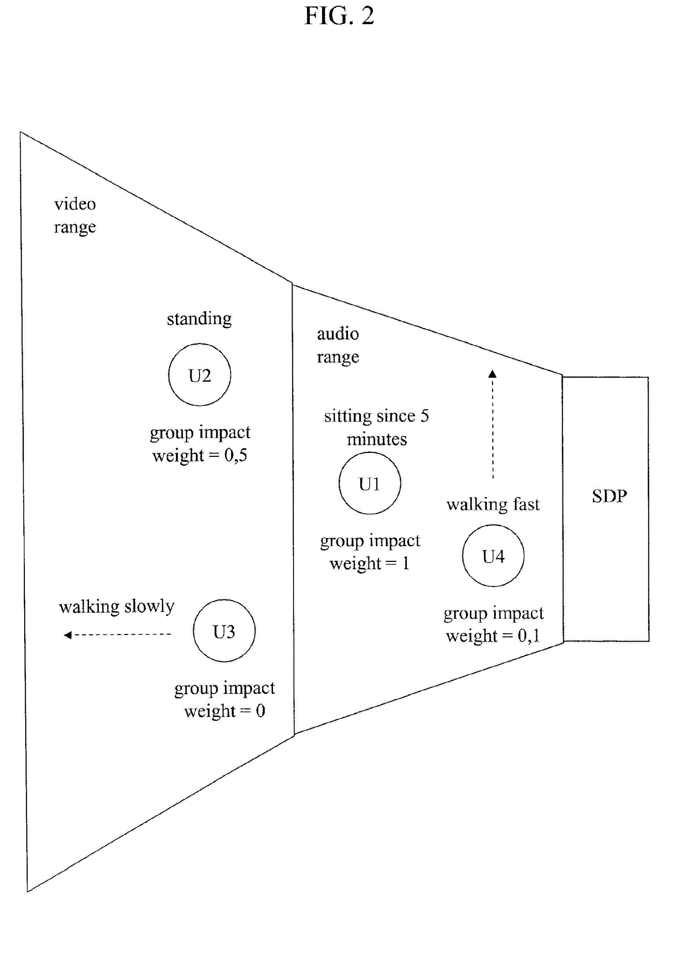

Referring to FIG. 2, a targeted ad service diffuses audio and video ads and there are four users around a service delivery point SDP like a digital monitor equipped with speakers, linked to the detection system and the profiling device according to the invention. A first user U1 is sitting close to the service delivery point SDP since 5 minutes, a second user U2 is standing far from the service delivery point SDP, a third user U3 is walking slowly away from the service delivery point SDP and a fourth user U4 is walking fast close to the service delivery point SDP. The ads to be displayed on a digital monitor for instance should be selected on the basis of a group profile which takes into account the activity of the present users. Thus, the relevant elements of the individual profile of the first user U1 sitting close to the service delivery point should have more influence than those of the second user standing far from it and hardly hearing the emitted sound. Finally, the individual profile of the fourth user U4 just passing by the service delivery point SDP will have very few impact on the resulting group profile and the one of the third user U3 walking away from the service delivery point SDP will have no impact at all.

Furthermore, the profiling device PD monitors the location of the users in the geographical area and establishes that users U1 and U4 are in the audio range of the service delivery point SDP and that users U2 and U3 are in the video range of the service delivery point SDP.

The following Table 1 summarizes relevant parts of individual profiles of the four users U1 to U4 corresponding to two different services related to advertisement and to news, with their respective weight impacting the group profile. Each part of individual profiles corresponds to a score attributed by the user to a service. For example, each score can be noted between 0 and 100, and each weight can have a value between 0 and 1.

**Table 1 - Group profile**

| | advertisement | news | weight |
|---|---|---|---|
| U1 | 90 | 60 | 1 |
| U2 | 50 | 30 | 0,5 |
| U3 | 20 | 80 | 0 |
| U4 | 10 | 30 | 0,1 |

It results that only users U1 and U2 have real impact on the group profile and the service related to advertisement should be selected.

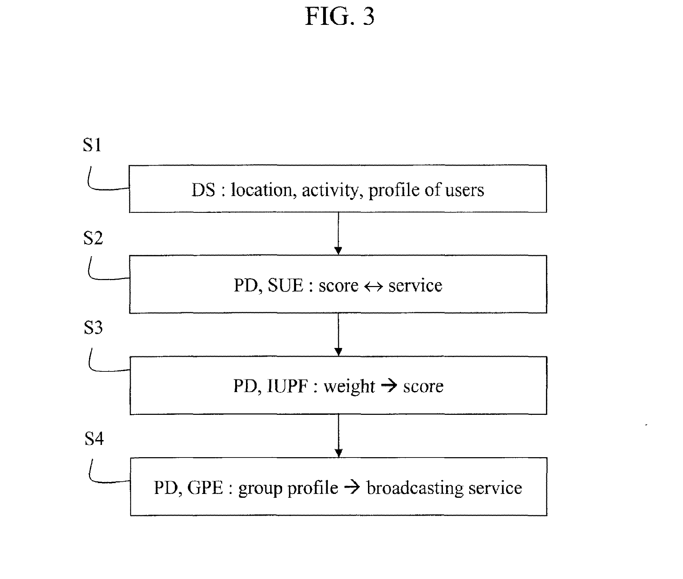

With reference to FIG. 3, a method for broadcasting services to a group of users according to one embodiment of the invention comprises steps S1 to S4 executed automatically within the communication system.

At step S1, the detection system DS monitors the location of users equipped with mobile terminal in the geographical area associated to the service delivery point, by means of the set of sensors SS. The context manager CM collaborates with the user activity analyzer UAA to provide the location, the activity and the context of the users.

Furthermore, the context manager CM retrieves individual user profiles from the mobile terminals TM of the users.

In an embodiment, the profiles can be retrieved from a centralized place where all user profiles are stored, like in the profile database PDB. For example, the mobile terminal MT of a user can transmit an identifier of the user to the service delivery point via a wireless communication, and the profiling device PD retrieves in the profile database PDB the profile of the user associated to the identifier.

In another embodiment, the user profile is stored on the mobile terminal MT of the user. The mobile terminal of the user can transmit the profile to the service delivery point via a wireless communication, and the profiling device PD retrieves the profile from the service delivery point.

At step S2, the profiling device PD, by means of the services usage estimator SUE, estimates the relevance of each user for different services. The estimator SUE determines the user profile elements which are relevant for the different services from the individual user profiles stored in the database PDB.

For example, the estimator SUE retrieves a score attributed by the user to each service.

At step S3, the profiling device PD, by means of the individual user profile filter IUPF, associates a weight to the score attributed by each user to each service according to the location and the current activity of the user.

At step S4, the profiling device PD, by means of the group profile engine GPE, produces a group profile using only the relevant parts of the profiles of the relevant users for the concerned service. The engine GPE keeps the best scores of the users modified by the weights to determine the service that has the highest scores. The service selected is then indicated to the service delivery point broadcasted within the geographical area.

Optionally, the profiling device PD can define a threshold with respect to a minimal score that should be attributed by a user to a service in order to take into account this score for the group profile.

Furthermore, the profiling device PD can define a format type for the service delivery, depending on the location of users in the geographical area. The format type can be an image format, an audio format, a video format, or an audio-video format.

For example, if most users are in the audio range with reference to FIG. 2, the format selected can be an audio-video format or an audio format. If most users are in the video range with reference to FIG. 2, the format selected can be a video format or an image format, an audio format being not adapted because most users will not hear clearly sounds from the service delivery point.

The service type and the service format can be selected in different orders. A type of service can be first selected and then the format of the selected service can be selected, if the service is available under different formats. Otherwise, a format of service can be first selected, and a type of service is selected under the constraint of available formats.

The invention described here relates to a method and device for broadcasting services to a group of users. In an embodiment, the steps of the method of the invention are determined by the instructions of a computer program incorporated in a data processing device such as profiling device DP according to the invention. The program includes program instructions which, when said program is executed in a processor of the data processing device the operation whereof is then controlled by the execution of the program, execute the steps of the method according to the invention.

As a consequence, the invention applies also to a computer program, in particular a computer program on or in an information medium readable by a data processing device, adapted to implement the invention. That program may use any programming language and be in the form of source code, object code or an intermediate code between source code and object code, such as a partially compiled form, or in any other desirable form for implementing the method according to the invention.

The information medium may be any entity or device capable of storing the program. For example, the medium may include storage means or a recording medium on which the computer program according to the invention is recorded, such as a ROM, for example a CD ROM or a microelectronic circuit ROM, or a USB key, or magnetic recording means, for example a diskette (floppy disk) or a hard disk.

## Claims

1. A method for broadcasting multimedia services to users that are located within a geographical area and are equipped with mobile terminals (TM), comprising the following steps in a device (PD) linked to a service delivery point associated to the geographical area:
determining (S2) a score attributed by each user to each service among a plurality of services,
associating (S3) a weight to the score attributed by each user to each service according to the location and the activity of the user within the geographical area,
producing (S4) a group profile according to the scores of the users modified by the weights, and
selecting (S4) a service adapted to the group profile in order to broadcast the selected service within the geographical area via the service delivery point.

2. A method according to claim 1, wherein the selected service is the service having the highest scores among the scores modified by the weights.

3. A method according to claim 1 or 2, further comprising the step of defining a format type for the service, depending on the location of users in the geographical area.

4. A method according to claim 3, wherein the format type is a format among an image format, an audio format, a video format, and an audio-video format.

5. A method according to any of claims 1 to 4, wherein the location and the activity of the users are determined by a set of sensors monitoring the geographical area through wireless communication with the mobile terminals of the users.

6. A method according to claim 5, wherein the activity of a user is defined according to one of immobility and mobility status, this latter comprising the direction and speed of the user.

7. A method according to any of claims 1 to 6, wherein the score attributed by a user is determined from a user profile that is retrieved from the mobile terminal (MT) of the user via a wireless communication.

8. Device (PD) linked to a service delivery point associated to a geographical area for broadcasting multimedia services to users that are located within a geographical area and are equipped with mobile terminals (TM), said device comprising :
means (SUE) for determining a score attributed by each user to each service among a plurality of services,
means (IUPF) for associating a weight to the score attributed by each user to each service according to the location and the activity of the user within the geographical area,
means (GPE) for producing a group profile according to the scores of the users modified by the weights, and
means (GPE) for selecting a service adapted to the group profile in order to broadcast the selected service within the geographical area via the service delivery point.

9. A computer program adapted to be executed in a device (PD) linked to a service delivery point associated to a geographical area for broadcasting multimedia services to users that are located within a geographical area and are equipped with mobile terminals (TM), said program including instructions which, when said program is executed in said device, execute the following steps :
determining (S2) a score attributed by each user to each service among a plurality of services,
associating (S3) a weight to the score attributed by each user to each service according to the location and the activity of the user within the geographical area,
producing (S4) a group profile according to the scores of the users modified by the weights, and
selecting (S4) a service adapted to the group profile in order to broadcast the selected service within the geographical area via the service delivery point.
